Europäisches Patentamt

(19) European Patent Office

Office européen des brevets

(11) Publication number: **0 237 987 B1**

# EUROPEAN PATENT SPECIFICATION

(45) Date of publication of patent specification:
13.11.91 Bulletin 91/46

(51) Int. Cl.⁵: **G02B 27/10, B23K 26/04**

(21) Application number: **87103694.3**

(22) Date of filing: **13.03.87**

(54) Laser beam diverter and robotic assembly comprising a laser beam diverter.

(30) Priority: **17.03.86 US 840231**

(43) Date of publication of application:
**23.09.87 Bulletin 87/39**

(45) Publication of the grant of the patent:
**13.11.91 Bulletin 91/46**

(84) Designated Contracting States:
**DE FR GB IT SE**

(56) References cited:
**EP-A- 0 141 724
US-A- 3 993 402
US-A- 4 060 314
US-A- 4 298 248
PATENT ABSTRACTS OF JAPAN, vol. 8, no.
136 (M-304)[1573], 23rd June 1984; & JP-A-59
35 892**

(73) Proprietor: **Cincinnati Milacron Inc.
(a corporation existing under the laws of
Ohio), 4701,Marburg Avenue
Cincinnati Ohio 45209 (US)**

(72) Inventor: **Borgmann,Robert E.
2949 Orchard Knoll Court
Cincinnati,Ohio 45239 (US)**

(74) Representative: **Lally, William et al
FORRESTER & BOEHMERT
Widenmayerstrasse 4/l
W-8000 München 22 (DE)**

## Description

The invention relates to laser beam diverters, particularly those which are adjustable, and used in structures such as corner mirror assemblies and the like.

In order to accomplish proper beam alignment along the pair of striaght line portions of a beam path which intersect one another at a mirror face, it is desirable to provide an adjustment mechanism for aligning the mirror face square with the bisector of the included angle of the beam path portions.

Certain prior art assemblies have attempted to provide adjustment to the mirror face by pivoting the mirror around a pivot pin while pushing with one screw for leverage, and having at least one spring pushing back on the other side of the mirror for biasing purposes. The prior art assemblies do not provide for multi-degrees of freedom, for truly accurate alignment of a beam path within a light pipe.

An optical element, which may be a mirror or a lense, is shown in US-A-4298248, in which the mirror holder has a conical surface which engages with a complementary conical surface on a mounting member, screw thread adjustment means being provided to cause relative movement between the mirror holder and the mounting member.

According to this invention there is provided a laser beam diverter having a mounting block, an angled beam path within said block having two straight-line portions intersecting at a junction point, thereby creating an included angle therebetween, and a beam-reflecting mirror intercepting said junction point, the diverter further comprising a mirror holder holding said mirror and having a spherical member portion; a mounting member having a corresponding spherical portion which engages the spherical member portion of the mirror holder so that the mirror holder is swivelable in relation to the mounting member; means for biasing said mirror holder relative to said mounting member; and adjusting means counteracting the biasing means for positionally adjusting said mirror holder relative to said mounting member.

Preferably said mirror holder and said mounting member have a spherical radius of curvature generated from said junction point of said angled beam path.

Preferably means is included for introducing drag between said mirror holder and said mounting member.

Desirably cooling means is provided for cooling said mirror holder.

According to this invention there is also provided a robotic assembly comprising a laser generating unit, an end effector drive means for causing movement of the end effector about multiple axes, and transmission means to transmit lased light from the generating unit to the end effector characterised in that the transmission means comprises at least two adjacent members defining intersecting light paths, and a laser beam diverter for reflecting a laser beam from one of said light paths to the other, the laser beam diverter being as set out in the last preceding paragraph but three.

There will now be given a detailed description, to be read with reference to the accompanying drawings, of a laser beam diverter and a robotic assembly comprising said laser beam diverter, each of which is illustrative of certain aspects of this invention, having been selected for the purposes of illustating the invention by way of example.

In the accompanying drawings:

FIGURE 1 is a side elevational view of the robotic assembly which is the preferred embodiment of the invention utilising a laser beam diverter in accordance with the invention;

FIGURE 2 is a rear elevational view of the robotic assembly of Figure 1;

FIGURE 3 is a side elevational view of the robotic assembly of Figure 1, with elements moved to an alternate position;

FIGURE 4 is a side elevational section through the laser beam diverter of Figure 1;

FIGURE 5 is an auxiliary view of the laser beam diverter, taken along the line 5-5 of Figure 4;

FIGURE 6 is a side elevational section corresponding to Figure 4 depicting an alternate embodiment; and

FIGURE 7 is a side elevational view in partial broken-away section, illustrating a rotatable assembly

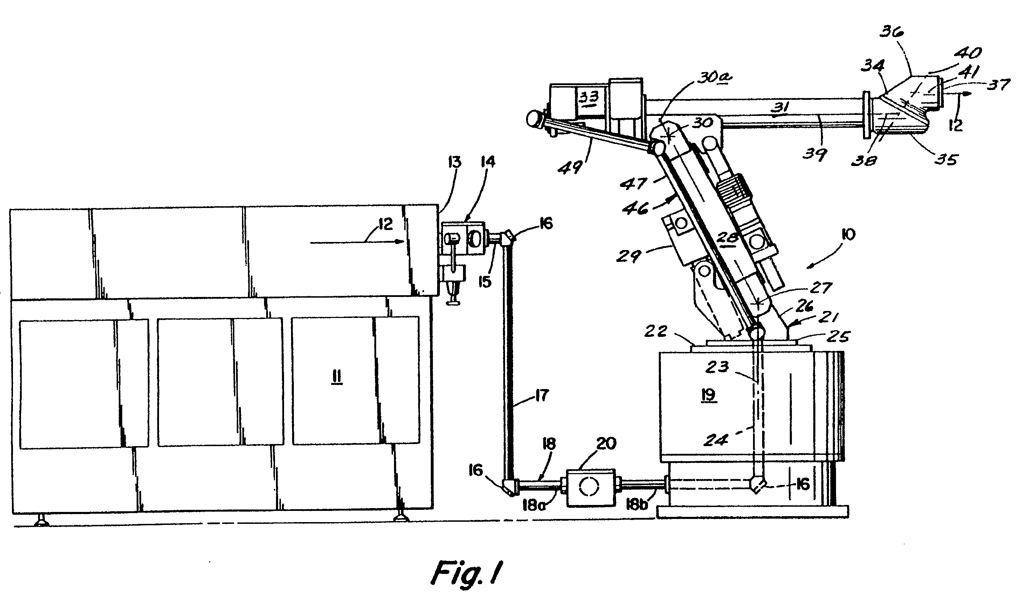

FIGURE 1 of the drawing illustrates a right side elevational view of a laser robot 10 having a laser generating unit 11 mounted on a floor nearby.the laser unit 11 may be any of a variety of industrial lasing units manufactured by companies such as Coherent Company, Spectra-Physiscs, etc. The preferred laser unit 11 for many power applications is a $CO_2$ gas laser, emitting a laser beam 12 along a horizontal path from the exit end 13 of the unit 11. The beam 12 is directed into a laser beam combiner 14, exiting through a light pipe 15 which is a hollow tube connected to the beam combiner 14 and to a path-direction changing unit such as the laser beam diverter, or corner mirror assembly 16, shown. The fixed mirror assembly 16 directs the beam 12 downward along a vertical path through a light pipe 17 to a second mirror assembly 16 which redirects the beam 12 along a horizontal path through a light tube 18 into the base 19 of the robot 10. The light pipe 18 may by continuous in many applications, but for the preferred embodiment the pipe 18 may be replaced by two pipe sections 18a, 18b with a beam switching box 20 located therebetween.

The base 19 of the robot 10 has a shoulder unit 21 mounted to its top side 22, where the shoulder unit 21 is rotatable around a central vertical axis 23 passing through the base 19. The laser beam 12 is directed from a mirror assembly 16 within the robot base 19 upward along the vertical base axis 23 through a fourth light pipe 24. The initial four light pipes 15, 17, 18, 24 are fixed with respect to the base 19 and floor 19(a). The shoulder unit 21 of the robot 10 essentially consists of a turntable 25 swivelable on the base 19, and a bracket 26 affixed to the turntable 25 has a horizontal pivot axis 27 for supporting a brachium, or upper arm 28, of the robot 10. The shoulder unit 21 supports a drive unit 29 which powers the brachium 28 in a pivoting motion relative to the shoulder unit 21. The brachium 28 has a horizontal pivot axis 30 at its topmost end, where a special forearm 31 is journalled on the pivot axis 30 for an elbow joint 30a, so that the assembly may be flexed and extended relative to the base 19. The brachium 28 also carries a drive unit which is connected to the brachium 28 and to the forearm 31 to provide for pivotal movement of the forearm 31. The rear end of the forearm 31 carries a drive box unit 33 for providing rotary motion to a wrist 34 carried on the forward end of the forearm 31. The wrist 34 basically consists of three parts, a base unit 35, a turret 36 and an end effector 37, each having serial roll movements which may be variously combined with one another in accordance with the drive box 33. The base unit 35 of the wrist 34 is rotatable about a first roll axis 38 coaxial with the forearm axis 39. The base unit 35 carries the turret unit 36 on a face angled with respect to the first roll axis 38 and the turret unit 36 is rotatable around the second roll axis 40 which is oblique to the first roll axis 38. The turret unit carries the end effertor unit 37 or tooling plate, which is rotatable about a third roll axis 41. in turn obliquely oriented with respect to the second roll axis 40. The end effector unit 37 carries tooling unique to the work assignment.

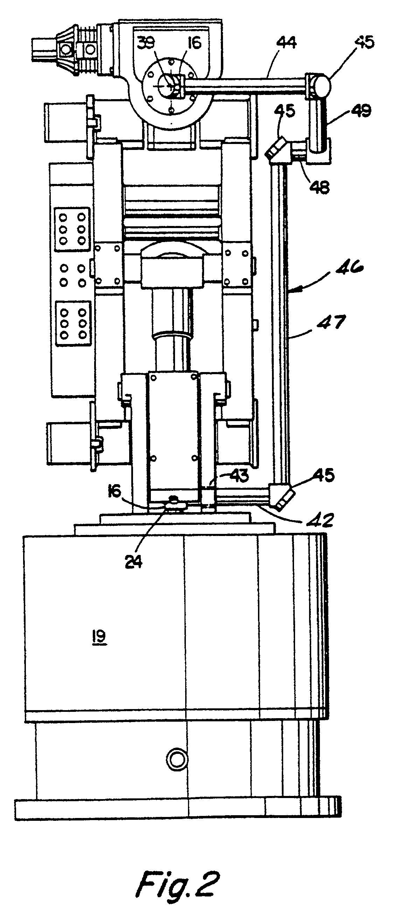

Referring to Figure 2, in conjunction with Figure 1, the vertical light pipe 24 extending through the base 19 is rotatably mated with a mirror assembly 16 at its topmost end, which is rigidly mounted within the shoulder bracket 26, and may rotate about axis 23 with respect to base 19. The mirror assembly 16 causes a 90° direction change of the beam 12 through a side-extending light pipe 42 which passes through a clearance hole 43 in the bracket 26. The upper part of Figure 2 shows that side-extending light pipe 44 is rigidly connected to a 90° mirror assembly 16 mounted on the forearm central axis 39. The side-extending upper light pipe 44 is connected to swivel mirror assembly 45, as is the lower light pipe 42.

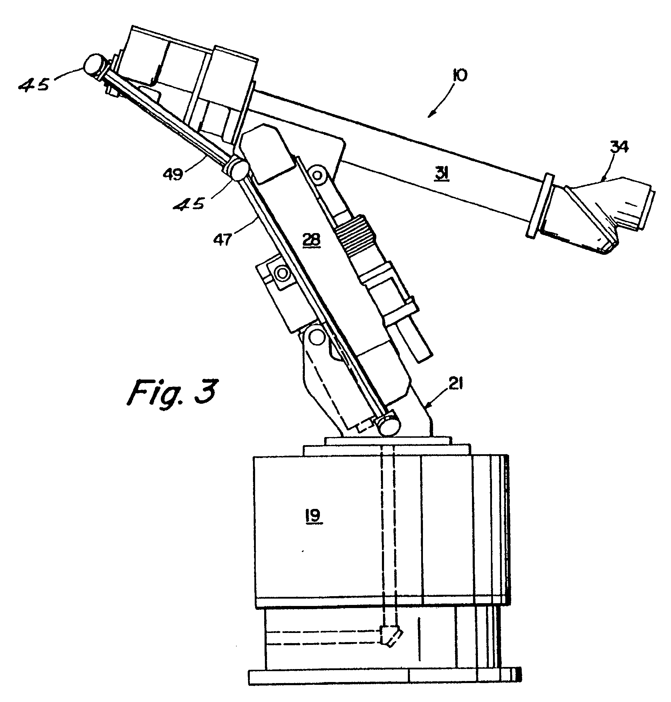

In order to accomplish movement of the upper arm 28 relative to the shoulder unit 21, the light pipe assembly must to be able to accommodate relative movement between the upper and lower side-extending light pipes 44, 42. To accomplish the movement, Figures 1 and 2 illustrate that an articulate light pipe linkage 46 must span the side-extending upper and lower light pipes 44, 42. The linkage 46 consists of a swivel mirror assembly 45 at the end of each horizontal light pipe having direction changing ability to redirect the beam path 90° to the horizontal pipes. A first linkage light pipe 47 is connected to the lower swivel mirror assembly 45 and extends alongside the brachium 28 from approximatly the lower pivot axis 27 to approximately the upper pivot axis 30. The upper end of the first linkage light pipe 47 has a swivelling mirror assembly 45 which is capable of recieving the beam 12 from the first linkage light pipe 47 and then redirecting it 90° to the horizontal axis. The swivel mirror assembly 45 of the second, horizontal linkage pipe 48 is connected to a third linkage light pipe 49 which is connected, in turn, to the swivel assembly 45 of the forearm light pipe 44. In the manner shown therefore, it may be appreciated that the forearm 31 and brachium 28 may be flexed about with respect to the shoulder unit 21 of the robot 10, and the linkage light pipes 47, 48, 49 will accommodate the flexing movement, as shown in Figure 3.

Referring to Figures 1, 4, and 5 the fixed elbow mirror assembly 16 is shown having a main body 600 drilled with intersecting 90° holes 601, 602. The holes 601, 602 are counterbored to receive a threaded bushing 603 which is bonded into place, and the bushing 603, in turn, receives a threaded light pipe adapter 604 which is secured by a washer 605 and locknut 606. The adapter 604 has a central hole 607 for the transmissions of a laser beam 12, and the smooth outside diameter 608, adjacent to a flange 609, is provided to fit within the counterbore 610 of a light pipe 15. A circular mirror 511 and related mounting unit 611 is secured in a double counterbore at the mitered surface 612 of the elbow body 600.

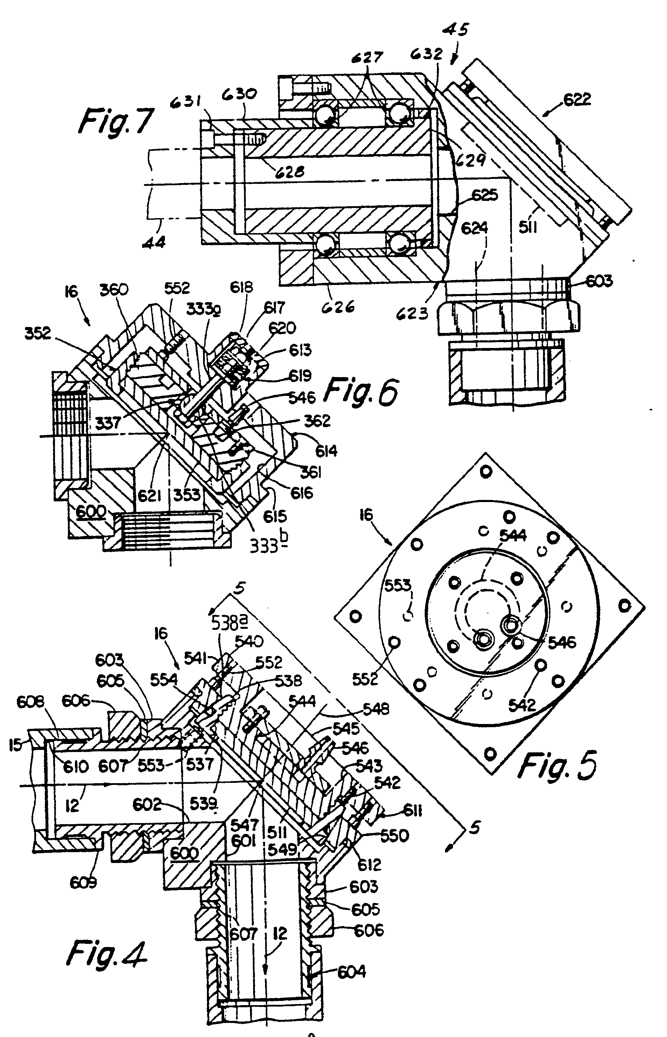

Referring to Figure 4, the circular mirror 511 is positioned in the counterbore 537 of a mirror retainer 538, the retainer 538 having a central clearance hole 539 extending therethrough. The counterbore 537 is threaded and received on the threaded diameter of a mirror adjusting bracket 540. The bracket 540 has a cylindrical flange 541 adjacent to the threaded diameter screwed in the mirror retainer 538, and is provided with a stop screw 542 to prevent overtightening of the mirror 511. The back face of the mirror adjusting bracket 540 has a counterbore 543, with a circular facial grove 544 machined into the bottom thereof, in the shape of an incomplete ring with approximately 60° between the start and stop points of the groove 544 (see Figure 5). A cover plate 545 is seated against the bottom of the counterbore 543 to enclose the groove 544, and pair of barbed hose fittings 546 are threadably received in the cover plate 545 to provide for coolant flow through the groove 544 when it is desired to cool the mirror 511. The outer surface of the mirror retainer 538 is sperhical, having a radius swung from the intersection point 547 of the surface of the mirror 511 at the centreline 548. A spherical socket 549 is provided in a square mounting plate 550 secured to the back of the elbow body 600 and accurately positioned with a fitting washer to establish the correct adjustment to the mirror reflecting point 547. An O-ring 554 may be fitted in a groove around the retainer 538 in the spherical socket 549, to provide a small amount of drag, useful to prevent slippage of the retainer 538 while it is adjusted. The flange 541 of the mirror adjusting bracket 540 has three equally-spaced swivel-pad adjusting screws 552 which bear against the mounting plate 550, and thereby provide an accurate swivel adjustment of the spherical mirror retainer 538. A plurality of commercial spring plungers 553, each having a theaded body and spring-loaded nose, are threadably received in the elbow body 600 to bias the mirror retainer 538 into its spherical socket 549.

An alternate embodiment of the fixed mirror assembly 16 is shown in Figure 6, wherein a mirror 353 is swivelable about a spherical bearing 337 journalled on the gimbal rod 333a. The rod 333a is a shoulder screw positioned with its shoulder surface even with the bottom of a counterbore 613 in a special mirror-adjusting block 614. The block 614 also serves as a cover for the assembly, having a flange 615 secured to the main body 600 of the assembly 16, and has a back-counterbore 616 to receive the mirror 353, externally-threaded mirror mounting base 360, and retaining ring 352. The adjusting block 614 is provided with three equally-spaced, swivel pad adjusting screws 552 to rock the mirror 353 about the spherical bearing 337. A small threaded stud portion 617 on the end of the gimbal rod 333a receives a pair of washers 618 having a stack of disc springs 619 therebetween, and a nut 620 holds the spring 619 together. The bearing 337 reacts against a plate 361 affixed to the base 360, the plate also serving to enclose a cooling groove 362. Thus, by the assembly shown, it can be seen that the adjusting screw 552 may be extended to provide a slight preload of the first washer 618 against the spring stock 619 as the gimbal rod 333a is thrusted toward the reflection point 621.

A swivel mirror assembly 45 is depicted in Figures 7 wherein the mirror mount assembly 622 indentical to that of Figure 4 or 6, has a main body 623 having 90° openings 624, 625 coacting with an internal mirror 511. The first opening 624 is provided with a stationary adapter ring 603 which is cemented in position (as also shown in Figure 4). However, the second counterboard, opening 625 of the main body 623 is provided with a special tubular adapter portion 626. The adapter portion 626 carries spaced-apart antifriction bearing 627 in a suitable bore, and an adapter tube 628 is carried within the bores of the twin bearings 627. The adapter tube 628 is axially positioned by an internal shoulder 629. The outer end of the tube 628 extends beyond the adapter portion 626 and carries a retaining cap 630, secured by screws 631. The cap 630 may comprise an integral part of a continuing light pipe 44. A seal 632 carried in the adapter portion 626 engages the adapter tube 628 to prevent the entry of contaminants into the system.

The assembly shown in Figure 7 therefore permits the eblow unit 45 to relatively rotate around a light pipe 44 while maintaining the accuracy of the mirror setting.

It will be appreciated by those skilled in the art that, while the corner mirror assemblies 16 and 45 are shown diverting the laser beam path through an included angle of 90°, the invention is equally applicable to units having acute or obtuse included angles.

## Claims

1. A laser beam diverter having a mounting block (600), an angled beam path within said block having two straight-line portions intersecting at a junction point (547, 621), thereby creating an included angle therebetween, and a beam-reflecting mirror (353, 511) intercepting said junction point (547, 621), the diverter further comprising a mirror holder (352, 360; 538) holding said mirror and having a spherical member portion (337, 538a); a mounting member (333a, 550) having a corresponding spherical portion (333b, 549) which engages the spherical member portion (337, 538a) of the mirror holder (352, 360, 538) so that the mirror holder (352, 360, 538) is swivelable in relation to the mounting member (333a, 550); means (618, 619, 620; 553) for biasing said mirror holder (352, 360; 538) relative to said mounting member (333a, 550); and adjusting means (552) counteracting the biasing means (618, 619, 620, 53) for positionally adjusting said mirror holder (352, 360; 538) relative to said mounting member (333a, 550).

2. A laser beam diverter according to Claim 1, wherein said mirror holder (538) and said mounting member (550) have a spherical radius of curvature generated from said junction point (547) of said angled beam path.

3. A laser beam diverter according to any one of Claims 1 and 3 further including means (554) for introducing a drag between said mirror holder (538) and said mounting member (550).

4. A laser beam diverter according to any one of the preceding claims further including means (543, 544, 545, 546) for cooling said mirror holder (538).

5. A robotic assembly comprising a laser generating unit (11), an end effector (37) drive means (33) for causing movement of the end effector about multiple axes, and transmission means (16, 17, 18) to transmit lased light from the generating unit (11) to the end effector (37), characterised in that the transmission means comprises at least two adjacent members (17, 18) defining intersecting light paths, and a laser beam diverter for reflecting a laser beam from one of said light paths to the other, the laser beam diverter being in accordance with any one of the preceding claims.

## Patentansprüche

1. Laserstrahlablenker, mit einem Einbaublock (600), mit einem abgewinkelten Strahlweg innerhalb des Blockes mit zwei geradlinigen Abschnitten, die sich an einem Verbindungspunkt (547, 621) schneiden, so daß sie zwischen sich einen eingeschlossenen Winkel erzeugen, und einem strahlreflektierenden Spiegel (353, 511), der den Verbindungspunkt (547, 621) aufnimmt, wobei der Ablenker weiterhin einen Spiegelhalter (352, 360; 538), welcher den Spiegel hält und einen kugelförmigen Bauteilabschnitt (337, 538a) hat; ein Einbauteil (333a, 550) mit einem entsprechenden kugelförmigen Abschnitt (333b, 549), welcher in den kugelförmigen Bauteilabschnitt (337, 538a) des Spiegelhalters (352, 360, 538) eingreift, so daß der Spiegelhalter (352, 360, 538) in bezug auf das Einbauteil (333a, 550) schwenkbar ist; Mittel (618, 619, 620; 553) zum Vorspannen des Spiegelhalters (352, 360; 538) relativ zu dem Einbauelement (333a, 550) und Einstellmittel (552), die den Vorspannmitteln (618, 619, 620, 53) entgegenwirken, um den Spiegelhalter (352, 360; 538) relativ zu dem Einbauteil (333a, 550) lagemäßig einstellen, aufweist.

2. Laserstrahlablenker nach Anspruch 1, bei dem der Spiegelhalter (538) und das Einbauteil (550) einen kugelförmigen Krümmungsradius haben, der von dem Verbindungspunkt (547) des abgewinkelten Strahlweges ausgeht.

3. Laserstrahlablenker nach einem der Ansprüche 1 und 2, der weiterhin Mittel (554) zum Einführen einer Widerstandskraft zwischen dem Spiegelhalter (538) und dem Einbauelement (550) umfaßt.

4. Laserstrahlablenker nach einem der vorangehenden Ansprüche, der weiterhin Mittel (543, 544, 545, 546) zum Kühlen des Spiegelhalters (538) umfaßt.

5. Robotervorrichtung, mit einer Laser-Erzeugereinheit (11), einer Antriebseinrichtung (33) für einen Endeffektor (37) zum Bewirken der Bewegung des Endeffektors um multiple Achsen und einer Übertragungseinrichtung (16, 17, 18) zum Übertragen von Laserlicht aus der Erzeugereinheit (11) zu dem Endeffektor (37), dadurch **gekennzeichnet**, daß die Übertragungseinrichtung wenigstens zwei benachbarte Teile (17, 18), welche sich schneidende Lichtwege definieren, und einen Laserstrahlablenker zum Reflektieren eines Laserstrahles von einem der Lichtwege zu dem anderen aufweist, wobei der Laserstrahlablenker nach einem der vorangehenden Ansprüche ausgebildet ist.

## Revendications

1. Déflecteur de faisceau laser comprenant un bloc de montage (600), un parcours de faisceau formant un angle à l'intérieur dudit bloc et comprenant deux portions en ligne droite se coupant en un point de jonction (547, 621), créant ainsi un angle inclus entre elles, et un miroir déflecteur de faisceau (353, 511) coupant ledit point de jonction (547, 621), le déflecteur comprenant en outre un support de miroir (352, 360; 538) supportant ledit miroir et comprenant une portion en forme d'organe sphérique (337, 538a); un organe de montage (333a, 550) comportant une portion sphérique (333b, 549) correspondante qui est en engagement avec la portion en forme d'organe sphérique (337, 538a) du support de miroir (352, 360; 538) de manière que ce dernier puisse pivoter par rapport à l'organe de montage (333a, 550); des moyens (618, 619, 620; 553) pour solliciter ledit support de miroir (352, 360; 538) par rapport audit organe de montage (333a, 550); et des moyens de réglage (552) qui agissent à l'encontre des moyens de sollicitation (618, 619, 620, 53) pour régler la position dudit support de miroir (352, 360; 538) par rapport audit organe de montage (333a, 550).

2. Déflecteur de faisceau laser selon la revendication 1, caractérisé en ce que ledit support de miroir (538) et ledit organe de montage (550) ont un rayon de courbure sphérique engendré à partir dudit point de jonction (547) dudit parcours de faisceau infléchi.

3. Déflecteur de faisceau laser selon l'une quelconque des revendications 1 et 2, comprenant en outre des moyens (554) pour introduire une force de retenue entre ledit support de miroir (538) et ledit organe de montage (550).

4. Déflecteur de faisceau laser selon l'une quelconque des revendications précédentes, comprenant en outre des moyens (543, 544, 545, 546) pour refroidir ledit support de miroir (538).

5. Assemblage robotique comprenant une unité de génération de laser (11), un effecteur d'extrémité (37), des moyens d'entraînement (33) pour provoquer le mouvement de l'effecteur d'extrémité autour d'axes multiples, et des moyens de transmission (16, 17, 18) pour transmettre la lumière laser depuis l'unité de génération (11) jusqu'à l'effecteur d'extrémité (37), caractérisé en ce que les moyens de transmission comprennent au moins deux éléments adjacents (17, 18) définissant des parcours de lumière se coupant, et un déflecteur de faisceau laser pour réfléchir un faisceau laser depuis l'un desdits parcours de lumière vers l'autre, le déflecteur de faisceau laser étant en accord avec l'une quelconque des revendications précédentes.

Fig.1

*Fig.2*

Fig. 3

Fig.7

Fig.6

Fig.5

Fig.4